# EUROPEAN PATENT SPECIFICATION

(11) **EP 2 719 875 B1**
(45) Date of publication and mention of the grant of the patent: **04.04.2018**
(21) Application number: 12797362.6
(22) Date of filing: 04.06.2012
(51) Int. Cl.: F02B 37/10, F02B 37/04, F02B 39/00, F02B 39/10, F02B 39/16, F02C 6/12, H02K 7/04

(54) **STRUCTURE AND METHOD FOR ADJUSTING BALANCE OF SUPERCHARGER BUILT INTO ELECTRIC MOTOR**
STRUKTUR UND VERFAHREN ZUR EINSTELLUNG DES GLEICHGEWICHTS EINES IN EINEN ELEKTROMOTOR EINGEBAUTEN TURBOLADERS
STRUCTURE ET PROCÉDÉ PERMETTANT DE RÉGLER L'ÉQUILIBRE D'UN COMPRESSEUR VOLUMÉTRIQUE INTÉGRÉ DANS UN MOTEUR ÉLECTRIQUE

(30) Priority: 08.06.2011 JP 2011127913
(43) Date of publication of application: 16.04.2014
(73) Proprietor: Mitsubishi Heavy Industries, Ltd., Tokyo 108-8215 (JP)
(72) Inventor: YAMASHITA, Yukio, Tokyo 108-8215 (JP); HAYASHI, Noriyuki, Tokyo 108-8215 (JP); IBARAKI, Seiichi, Tokyo 108-8215 (JP); OSAKO, Katsuyuki, Kitakyushu-City , Tokyo 108-8215 (JP); EBISU, Motoki, Tokyo 108-8215 (JP); AN, Byeongil, Tokyo 108-8215 (JP); SUZUKI, Hiroshi, Tokyo 108-8215 (JP); ARITA, Hideaki, Tokyo 100-8310 (JP); GOTO, Takashi, Tokyo 100-8310 (JP); MIYAKE, Toshihiko, Tokyo 102-0073 (JP)
(74) Representative: Hess, Peter K. G.
(86) International application number: PCT/JP2012/064395
(87) International publication number: WO 2012/169463

(56) References cited:
- EP-A1- 0 087 197
- EP-A1- 2 031 742
- EP-A2- 0 748 027
- WO-A1-2007/145033
- DE-A1- 3 304 845
- JP-A- 10 243 612
- JP-A- 11 289 699
- JP-A- 2003 079 117
- JP-A- 2006 291 923
- US-A- 5 767 607
- US-B1- 6 845 617

## Description

### TECHNICAL FIELD

The present invention relates to a structure and a method for adjusting rotational balance of a rotor of a turbocharging device incorporating an electric motor turbocharging suction air to an internal combustion. Herein, the turbocharging device incorporating an electric motor includes a turbo charger incorporating a motor generator, a turbo charger incorporating an electric motor, an electric supercharger, and the like.

### BACKGROUD ART

Turbo chargers for compressing and turbocharging suction air by driving with exhaust gas of an internal combustion has been widely used, in order to improve output of the internal combustion.

There has been used a turbo charger incorporating a motor generator that improves acceleration responsiveness by incorporating an electric motor in a rotary shaft of the turbocharging device and assisting the acceleration of rotation of a compressor impeller, and collects energy by converting exhaust gas energy into electric energy. In a case where exhaust gas energy is not utilized and a turbine is omitted, the turbo charger incorporating a motor generator is an electric supercharger that rotates a compressor impeller by only an electric motor.

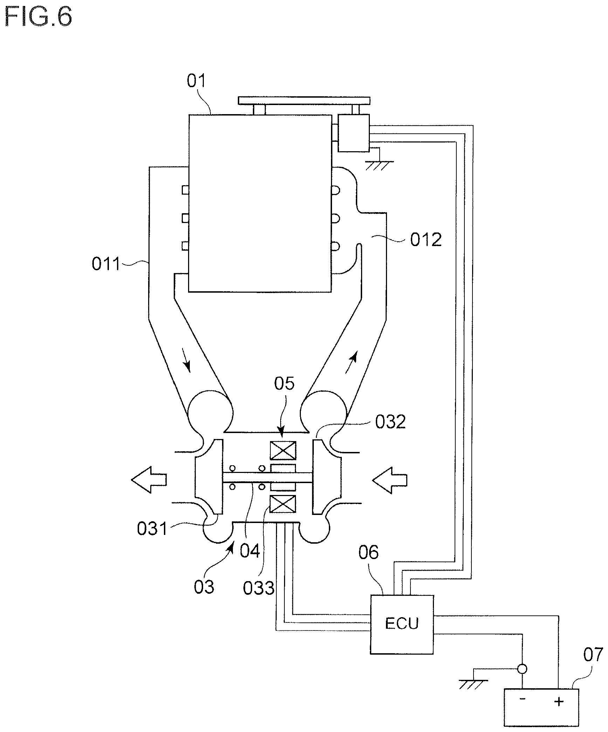

Fig. 6 is a schematic configuration diagram of an engine 01 mounted with a turbo charger 03 incorporating a motor generator disclosed in Japanese Patent Application Laid-open No. H8-182382 (Patent Document 1). A turbine wheel 031 of the turbo charger incorporating a motor generator 03 is driven by exhaust gas from an exhaust manifold 011 of the engine 01. A compressor impeller 032 coaxially connected to the turbine wheel 031 is driven, so that suction air from an air cleaner (not shown) is supplied to the engine 01 via a suction manifold 012.

A motor rotor 05 for assisting rotation (driving) of the compressor impeller 032 is disposed on the intermediate portion of a shaft 041 for connecting the turbine wheel 031 and the compressor impeller 032.

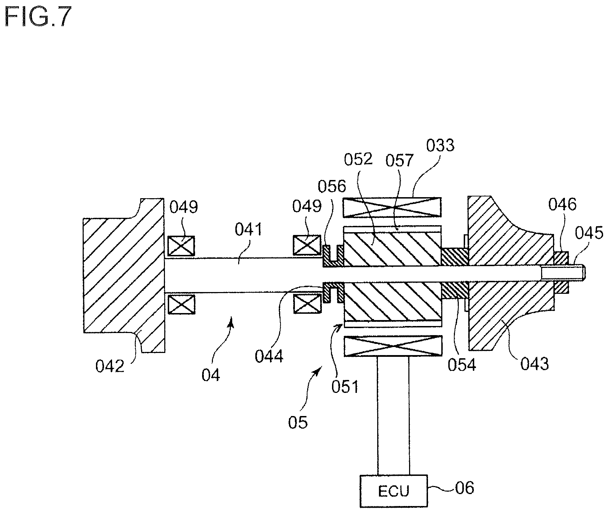

As shown in Fig. 7, the motor rotor 05 is axially rotatably supported on a pair of bearing support parts provided in a housing (not shown) of the turbo charger incorporating a motor generator 03 via bearings 049.

Reference numeral 06 denotes an engine control unit (ECU), which controls operation of the engine 01, flows a current to a stator 033 depending on the operation status of the engine 01, and also controls operation of the turbo charger incorporating a motor generator 03. Reference numeral 07 denotes a battery, which is a power supply of a controller.

Fig. 7 is a schematic configuration diagram of a conventional motor rotor.

A motor rotor 05 has a step part 044 that is a narrow shaft part on a side closer to a compressor impeller 043, on an intermediate part in the thrust direction of a shaft 041 having an end mounted with a turbine wheel 042. A nut 046, which is screwed with a screw part formed on the end of the narrow shaft part, through a thrust bush 056, a rotor 051, an oil seal accessory 054, and the compressor impeller 043 which are fitted with (fitted onto) the narrow shaft part, presses and positions these components with respect to the step part 044.

A magnet 052 (permanent magnet) is fitted onto the narrow shaft part of the shaft 041, a sleeve 057 is further fitted onto the outer peripheral part of the magnet 052 to be fixed to the narrow shaft part of the shaft 041, thereby forming the rotor 051.

In this case, the sleeve 057 needs to be fitted onto the outer peripheral part of the magnet arranged on the rotor 051, in order to prevent breakage and scattering of the magnet.
A stator 033 for rotating and driving the shaft 041 by utilizing magnetism of the magnet of the rotor 051 is arranged on the housing side of the turbo charger incorporating a motor generator 03, facing the rotor 051.

As a technology related to such a turbo charger incorporating a motor generator, Japanese Patent Application Laid-open No. 2000-145468 (Patent Document 2) is known.

Patent Document 1: Japanese Patent Application Laid-open No. H8-182382
Patent Document 2: Japanese Patent Application Laid-open No. 2000-145468
Patent Document 3: US 6,845,617 B1

Patent Document 3 relates to an electric assisted turbocharger, which has an electric motor with a stator and a rotor that is coupled to a turbocharger shaft carried by a bearing assembly.

However, since the turbo charger incorporating a motor generator is used under a high temperature environment resulting from exhaust gas, performance of a motor that utilizes a magnet significantly deteriorates with rise in temperature, and such a motor is not suitable.

To cope with this, there is a magnetic inductor type motor as one of motors that do not use a magnet.

The magnetic inductor type motor is configured that a rotor made of laminated electromagnetic steel plates and iron, or laminated electromagnetic steel plates are driven by a stator arranged around the rotor.

However, since the rotor rotates at a high speed in a state of being arranged between a turbine wheel and a compressor impeller, it is important to adjust the rotational balance (dynamic balance) of the rotor made of the laminated electromagnetic steel plates and iron, or the laminated electromagnetic steel plates for balancing. Therefore, the adjustment of the rotational balance on a conventional adjustment part (e.g., a nut part for fastening the compressor impeller to a rotary shaft of the turbo charger) can not cope with increase in an adjustment amount, or fine adjustment.

### DISCLOSURE OF THE INVENTION

The present invention has been conceived in order to solve such problems, and an object thereof is to provide a structure and a method for adjusting balance of a turbo charger incorporating a motor generator capable of achieving increase in adjustment parts (increase in an adjustment amounts and ensuring fine adjustment) for adjusting the rotational balance of a rotary shaft of the turbo charger, and preventing performance deterioration while maintaining sufficient motor driving force even under a high temperature condition. These objects are solved by the features of device claim 1 and method claim 6. The dependent claims recite advantageous embodiments of the invention.

According to a preferred embodiment of the invention, a balance adjusting structure for a turbocharging device incorporating an electric motor includes: at least one rotor blade disposed in a housing; a shaft connected to the rotor blade; a bearing formed in the housing, and configured to rotatably axially support the shaft; a rotor core penetrated by the shaft; and a stator disposed at a position facing the rotor core in the housing, and configured to rotate and drive the rotor core together with the shaft by a magnetic field, wherein the rotor core has a sleeve fitted onto the shaft, a plurality of electromagnetic steel plates laminated in an axial direction of the sleeve and fitted onto the sleeve, and a rotational balance adjusting member disposed on a part of the electromagnetic steel plates in a laminating direction, and having a thickness larger than a thickness of each electromagnetic steel plate, and the rotational balance adjusting member is processed to adjust rotational balance.

With such a configuration, although heretofore, rotational balance has been adjusted by cutting a nut for fastening a shaft on a compressor impeller being a rotor blade of the turbocharging device incorporating an electric motor, the rotational balance adjusting member enabling balance adjustment is added in addition to the nut part, so that the number of portions where the rotational balance is adjusted increases, thereby enabling higher accurate rotational balance adjustment.

Additionally, the rotational balance adjusting member is made of a magnetic material, for example, iron, and hence magnetic force resulting from magnetic induction is strengthened. This contributes to improvement of performance as a turbo charger with improvement of performance as an electric motor.

In a preferred embodiment of the invention, the rotor core is preferably configured such that the rotational balance adjusting member is interposed on an intermediate part in the laminating direction of the laminated electromagnetic steel plates.

The rotational balance adjusting member is interposed on the intermediate part in the laminating direction of the laminated electromagnetic steel plates, particularly on a central part is referred to as a center ring.

Thus, the rotational balance adjusting member that is interposed on the intermediate part in the laminating direction of the laminated electromagnetic steel plates, particularly on the central part, and hence magnetic induction on the both sides of the rotational balance adjusting member is uniformed, thereby improving output as a motor.

In a preferred embodiment of the invention, the rotor core preferably includes the sleeve fitted onto the shaft, the plurality of electromagnetic steel plates fitted onto the sleeve, and arranged as a lamination, and a rotational balance adjusting member fixed to both ends of the sleeve, and configured to fix and sandwich the plurality of electromagnetic steel plates.

With such a configuration, it is possible to form the rotor core in a cartridge-type, and facilitate assembly to the shaft. Additionally, the rotational balance adjustment portions are fixed to the both ends of the sleeve, and the number of the adjustment portions are increased, and hence an adjustment capacity in final rotational balance adjustment after the assembly to the rotor increases, and fine adjustment is possible. Consequently, high accurate rotational balance adjustment is possible.

In a preferred embodiment of the invention, the rotor core preferably includes a rotational balance adjusting member fitted onto the sleeve, and interposed on an intermediate part in the laminating direction of the plurality of electromagnetic steel plates that are arranged as a lamination, and a rotational balance adjusting member configured to fix and sandwich both ends of the laminated electromagnetic steel plates, and fixed to both ends of the sleeve.

With such a configuration, it is possible to form the rotor core in a cartridge-type, and facilitate assembly to the shaft. Additionally, the rotational balance adjustment portions are fixed to the both ends and the intermediate part of the sleeve, and the number of the adjustment portions increases. Therefore, even when rotational balance adjustment singly using the rotor core that requires a large number of steps is omitted, and merged into final rotational balance adjustment after the assembly of the rotor, an adjustment amount can be greatly expanded. Consequently, high accurate rotational balance adjustment is possible.

In the present invention, at least one rotational balance adjusting member of the rotational balance adjusting members is preferably configured by assembling laminated layers of the same magnetic material as the electromagnetic steel plates of the rotor core.

With such a configuration, as the rotational balance adjusting member interposed on the intermediate part in the laminating direction of the laminated electromagnetic steel plates, particularly on the central part, the center ring is made of, for example, an electromagnetic steel plate being a magnetic material or iron, and hence magnetic force resulting from magnetic induction is strengthened. This enables contribution to improvement of performance as a turbocharging device incorporating an electric motor with improvement of performance as an electric motor. Furthermore, the electromagnetic steel plate is used for the center ring, and hence assembly of the center ring is completed in a step of assembling the electromagnetic steel plates of the rotor core. Consequently, the number of assembly steps can be further reduced.

In the present invention, the turbocharging device incorporating an electric motor is preferably either a turbo charger incorporating a motor generator that is mounted with a turbine wheel, which is a rotor blade for utilizing exhaust gas energy on an end of the shaft penetrated by the rotor core and the bearing, and that is mounted with a compressor impeller, which is a rotor blade for compressing inlet air on other end thereof, or an electric supercharger that does not have the turbine wheel and that is mounted with a compressor impeller for compressing inlet air only on one end of the shaft.

Furthermore, according to a preferred embodiment of the invention, a rotational balance adjusting method for a rotor of a turbo charger incorporating a motor generator includes the steps of: performing rotational balance adjustment by singly using a rotor blade, for example, such as a turbine wheel, and a compressor impellor; assembling a rotor including the turbine wheel, the compressor impellor, and a rotor core having a rotational balance adjusting member made of a magnetic material; measuring a balance amount by rotating the rotor; and adjusting and processing rotational balance by using an compressor fastening nut, the rotational balance adjusting member of the rotor core, or both of the compressor fastening nut and the rotational balance adjusting member, on the basis of a result of measurement.

With such a configuration, the compressor fastening nut and the rotational balance adjusting member of the rotor core enable the rotational balance adjustment portions, and increase in the number of the adjustment portions and fine adjustment are possible. Consequently, even when rotational balance adjustment singly using the rotor core that requires a large number of steps is omitted, and merged into final rotational balance adjustment after the assembly of the rotor, high accurate rotational balance adjustment is possible.

In the present invention, a step of adjusting rotational balance by singly using the rotor core before the step of assembling the rotor may be further added.

Thus, the step of adjusting rotational balance by singly using the rotor core is further added, and hence it is possible to obtain the rotor with higher accurate rotational balance.

According to a preferred embodiment of the invention, although heretofore, rotational balance has been adjusted by cutting a nut for fastening a shaft on a compressor impeller, the rotational balance adjusting member enabling balance adjustment is added to the rotor core in addition to the nut part, so that the number of portions where the rotational balance is adjusted increases, thereby enabling higher accurate rotational balance adjustment.

Additionally, the rotational balance adjusting member is made of a magnetic material, for example, iron, and hence magnetic force resulting from magnetic induction is strengthened. This contributes to improvement of performance as a turbo charger with improvement of performance as an electric motor.

### BRIEF DESCRIPTION OF THE DRAWINGS

Fig. 1 is a schematic structure diagram of a turbine rotor according to a first embodiment of the present invention;
Fig. 2 is a schematic structure diagram of a turbine rotor according to a second embodiment of the present invention;
Fig. 3 is a schematic structure diagram of a turbine rotor according to a third embodiment of the present invention;
Fig. 4 is a flowchart of processes of rotational balance adjustment work of the turbine rotor according to the first embodiment of the present invention;
Fig. 5 is a flowchart of processes of another rotational balance adjustment work of the turbine rotor according to the first embodiment of the present invention;
Fig. 6 shows a schematic configuration diagram of an engine mounted with a conventional turbo charger incorporating a motor generator; and
Fig. 7 shows a schematic explanatory diagram of a conventional turbine rotor.

### DESCRIPTION OF THE PREFERRED EMBODIMENTS

Hereinafter, embodiments of the present invention will be described in detail with reference to the figures.

As specific names of a rotor blade, a turbine wheel, and a compressor impeller are used in the description of these embodiments. Additionally, as long as not stated specifically in particular, size, quality of materials, shape, relative arrangement of components described in these embodiments are not intended to limit the scope of the invention, but merely exemplary examples.

### (First Embodiment)

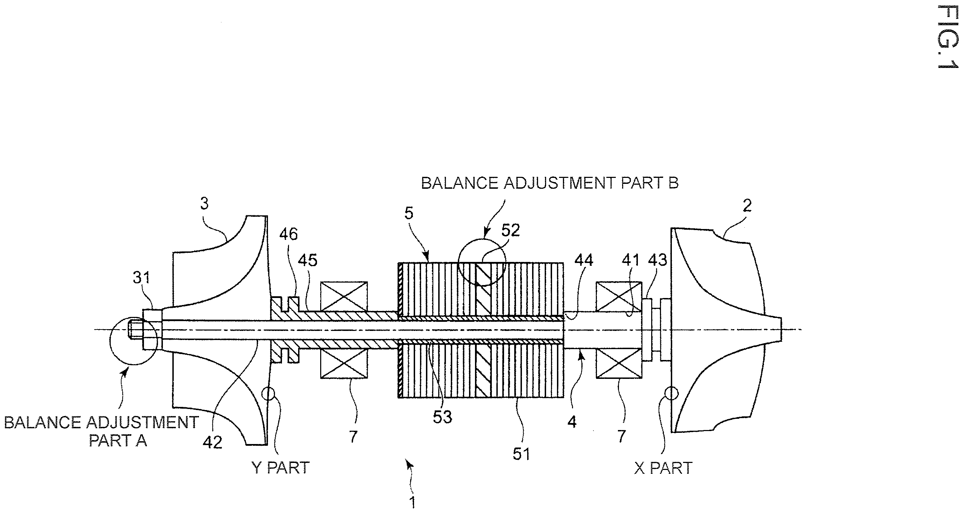

A turbine rotor according to a first embodiment of the present invention will be described with reference to Fig. 1.

A turbine rotor 1 includes a shaft 4, a turbine wheel 2 disposed on one end of the shaft 4, a compressor impeller 3 disposed on the other end thereof, two bearings 7 disposed between the turbine wheel 2 and the compressor impeller 3 at intervals, and a rotor core 5 that serves as an electric rotor, and is disposed between the two bearings 7, and the rotor core 5 is mounted on the shaft 4 via a sleeve 53.

The present invention is applicable to both of a case where the respective bearings 7 are arranged on both outer ends of the rotor core 5 as described above, and a case where the two (pair of) bearings 7 are arranged between the turbine wheel 2 and the rotor core 5 at intervals.

The shaft 4 is a solid shaft, has a stepped part 44 narrowed from an intermediate part, and is a rotary shaft having a thick portion 41 on one end and a narrow portion 42 on the other end. The turbine wheel 2 that is driven by exhaust gas is fixed to the end of the thick portion 41 of the shaft 4. The bearing 7 fixed to a bearing support part formed in a turbine housing (not shown) is disposed on a back surface side of the turbine wheel 2 via a first seal ring 43 formed integrally with the shaft 4.

The rotor core 5 that incorporates the sleeve 53 is fitted onto the narrow portion 42 of the shaft 4 by employing, as a stopper, the stepped part 44 being a stopper part. The rotor core 5 is configured such that a plurality of electromagnetic steel plates 51 having circular circumference are inserted around the sleeve 53 to be laminated in the plate thickness direction of the electromagnetic steel plates 51. A center ring 52 that is a rotational balance adjusting member, and is made of an electromagnetic steel plate being a magnetic material, or iron is interposed between the electromagnetic steel plates on the intermediate part, particularly the central part, in the laminating direction of the laminated electromagnetic steel plates 51.

On a side closer to the compressor impeller 3 of the rotor core 5, sleeve 45 fitted onto the narrow portion 42 of the shaft 4 abuts. On the other end of the shaft 4, the compressor impeller 3 is fixed with a nut 31 for fastening via a second seal ring 46.

Accordingly, the rotor core 5 has a structure of regulating relative movement in the rotational direction with the shaft 4 by application of proper pressing by the second seal ring 46 interposed between the nut 31 and the rotor core 5.

The bearings 7 disposed between the rotor core 5 and the compressor impeller 3 is fitted onto the sleeve 45.

With such a configuration, the center ring 52 serves as an adjustment cut part of the rotational balance of the turbine rotor 1, in addition to the nut 31, thereby increasing an adjustment range of the rotational balance.

Additionally, the center ring 52 has a diameter larger than that of the nut 31, and hence effects of the balance adjustment of the center ring 52 is larger even if the cutting amount is unchanged, and high accurate adjustment is possible in a wide range. Furthermore, fine adjustment is possible.

Moreover, the rotational balance adjusting member made of an electromagnetic steel plate or iron is disposed on the intermediate part, particularly on the central part, of the laminated electromagnetic steel plates 51, and hence magnetic induction amounts on the both sides of the rotational balance adjusting member are uniformed, thereby exerting an effect of improving output as a motor.

In this embodiment, the center ring 52 that serves as the rotational balance adjusting member is disposed on the intermediate part, particularly on the central part, in the laminating direction of the electromagnetic steel plates 51. However, also in a case where the center ring 52 is disposed on any portion in the laminating direction other than the central part, an action effect as the rotational balance adjusting member can be obtained.

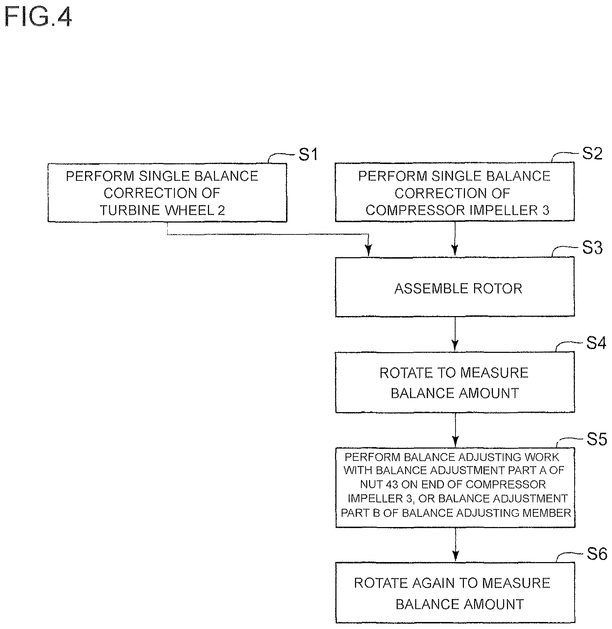

The correction portion for adjusting the rotational balance of the turbine rotor 1 has been described. Now, description will cover a flow of processes of a rotational balance adjusting method of the turbine rotor 1 shown in Fig. 4.

Step Si of setting the turbine wheel 2 in the balance measurement device, measuring a rotational balance amount, and performing balance adjustment of the single turbine wheel 2 on the basis of a result of the measurement.

Next, Step S2 of setting the compressor impeller 3 in the balance measurement device, and performing balance adjustment of the single compressor impeller 3 similarly to Step S1.

The rotational balance adjustment of the turbine wheel 2 and the compressor impeller 3 is performed (cut) on the rear side of the rear side (X part (see Fig. 1)) of the turbine wheel 2 and on the rear side of the rear side (Y part (see Fig. 1)) of the compressor impeller 3.

Step S3 of assembling the turbine rotor 1 by mounting the turbine wheel 2, the compressor impeller 3, the rotor core 5, the bearings 7, the sleeve 45, and the like on the shaft 4.

Step S4 of setting the assembled turbine rotor 1 in the balance measurement device, and measuring a balance amount of the whole of the turbine rotor 1.

Step S5 of performing balance adjustment by cutting work of a balance adjustment part A of the nut 31 for fastening the compressor impeller or cutting work of a balance adjustment part B of the outer peripheral part of the center ring 52, on the basis of a result of measurement.

Furthermore, in Step S5, the cutting work order as to which cutting work is first performed, the cutting work of the nut 31 or the cutting work of the center ring 52 may be determined every time the cutting work is performed.

Then, the turbine rotor 1 is set in the balance measurement device again, the balance adjustment is terminated by Step S6 of confirming the balance of the turbine rotor 1.

In a case where the result of measurement in Step S6 is not an arbitrary balance amount or less, Step S5 and Step S6 are repeatedly performed.

Since various balance measurement devices are disclosed in patent documents (e.g., Japanese Patent Application Laid-open Nos. 2008-58008 and 2008-8219) and the like, description of the balance measurement device will be omitted in this embodiment.

According to the flow of the processes of the rotational balance adjusting method of the turbine rotor 1 of this embodiment, the adjustment portions for rotational balance of the assembled turbine rotor 1 are the balance adjustment part A of the nut 31, and the balance adjustment part B of the center ring 52, and hence the balance adjustment amount is increases with increase in the balance adjustment portions, and high accurate balance adjustment is possible in a wide range. Furthermore, fine adjustment is also possible.

Moreover, the center ring 52 has a diameter lager than that of the nut 31, and hence the effects of the balance adjustment of the center ring 52 are larger even if the cutting amount is unchanged. Accordingly, the cutting work of the nut 31 can be sometimes omitted by first performing the adjustment cutting of the center ring 52, and reduction in the number of processes can be expected.

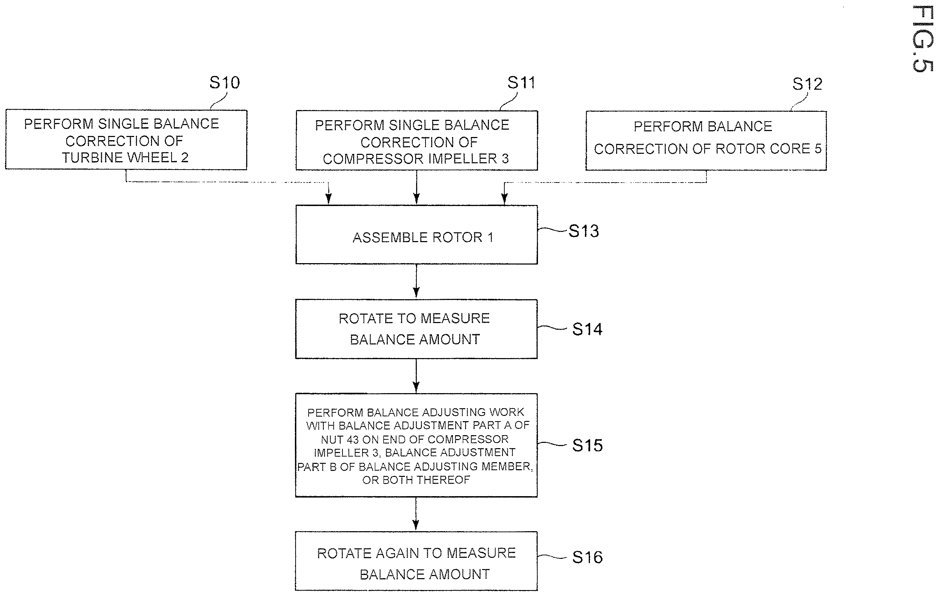

Now, a flow of processes of another rotational balance adjusting method of the turbine rotor 1 will be described with reference to Fig. 5.

Step S10 of setting the turbine wheel 2 in the balance measurement device, measuring a rotational balance amount, and performing balance adjustment of the single turbine wheel 2 on the basis of a result of the measurement.

Next, Step S11 of setting the compressor impeller 3 in the balance measurement device, and performing balance adjustment of the single compressor impeller 3 similarly to Step S10.

Then, Step S12 of setting the rotor core 5 in the balance measurement device, and performing balance adjustment of the single rotor core 5 similarly to Step S10.

The rotational balance adjustment of the turbine wheel 2 and the compressor impeller 3 is performed on the rear side (X part) of the turbine wheel 2 and on the rear side (Y part) of the compressor impeller 3.

Step S13 of assembling the turbine rotor 1 by mounting the turbine wheel 2, the compressor impeller 3, the rotor core 5, the bearings 7, the sleeve 45, and the like on the shaft 4.

Step S14 of setting the assembled turbine rotor 1 in the balance measurement device, and measuring a balance amount of the whole of the turbine rotor 1.

Step S15 of performing balance adjustment by cutting work of the balance adjustment part A of the nut 43 for fastening the compressor impeller or cutting work of the balance adjustment part B of the outer peripheral part of the center ring 52, on the basis of a result of measurement.

In Step S15, the cutting work order as to which cutting work is first performed, the cutting work of the nut 31 or the cutting work of the center ring 52 may be determined every time the cutting work is performed.

Then, the turbine rotor 1 is set in the balance measurement device again, the balance adjustment is performed by Step S16 of confirming the balance of the turbine rotor 1.

In a case where the result of measurement in Step S16 is an arbitrary balance amount or more, Step S15 and Step S16 are repeatedly performed.

In this embodiment, according to the flow of the processes of the rotational balance adjusting method of the turbine rotor 1, rotational balance adjustment of the single rotor core 5 that is the heaviest among the components is performed, and hence the rotational balance adjustment amount of the assembled turbine rotor 1 is reduced, and balance adjustment performed after the turbine rotor 1 is assembled is facilitated.

### (Second Embodiment)

In this second embodiment, components that are identical with those of the first embodiment are denoted by the same reference numerals, and description thereof will be omitted.

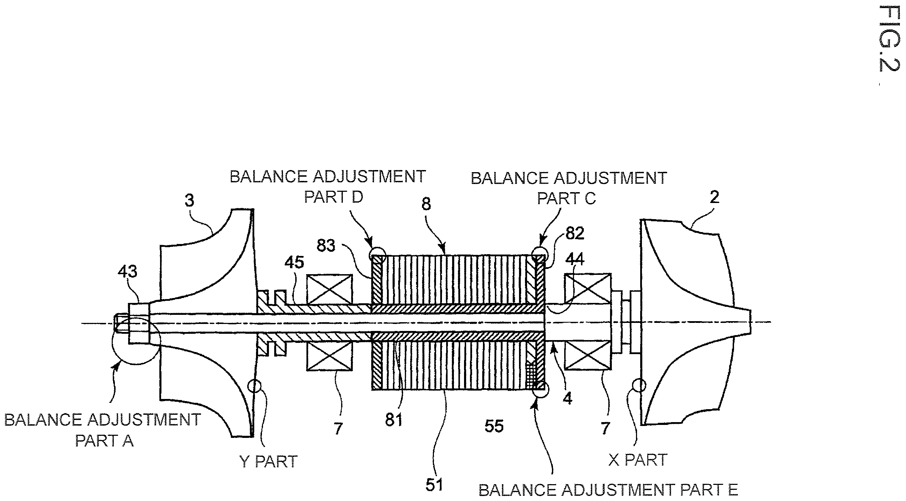

As shown in Fig. 2, a rotor core 8 is configured such that a plurality of electromagnetic steel plates 51 are disposed on a sleeve 81 fitted onto a narrow portion 42 of a shaft 4.

The sleeve 81 is formed with a flange part 82 radially from an open edge on one end side of the sleeve 81.

On the outer peripheral part of the sleeve 81, the electromagnetic steel plates 51 are fitted onto the sleeve 81 so as to be laminated in the thrust direction of the sleeve 81.

On the other end side of the sleeve 81, a pressing ring 83 is fitted onto the outer peripheral part of the sleeve 81 to be fixed in caulking to the sleeve 81 in a state of pressing the electromagnetic steel plates 51 in the thrust direction.

Additionally, a center target 55 having an outer diameter substantially identical with that of the electromagnetic steel plates 51, and a thickness larger than that of each electromagnetic steel plate 51 is disposed between the electromagnetic steel plates 51 and the flange part 82. The center target 55 is a part of a revolution speed detection unit used in a case where the revolution speed of the turbine rotor 1 is controlled. In a case where the revolution speed does not need to be detected, the center target 55 is unnecessary.

The rotor core 8 is pressed against a stepped part 44 via a compressor impeller 3 and a sleeve 45 by a nut 43, thereby preventing slip in the rotational direction with respect to the shaft 4.

The flange part 82 and the pressing ring 83 each have an outer diameter substantially identical with that of each electromagnetic steel plate 51, and have an action as a rotational balance adjusting member.

The processes of a rotational balance adjusting method is similar to those of the first embodiment, and therefore description thereof will be omitted.

The electromagnetic steel plates 51 are fitted onto the sleeve 81 in a laminated manner, and the both sides of the electromagnetic steel plates 51 are sandwiched between the flange part 82 and the pressing ring 83, thereby facilitating assembly of the shaft 4 and improving the quality of the assembly.

Furthermore, a balance adjustment part C of the flange part 82, and a balance adjustment part D of the pressing ring 83 serve as rotational balance adjustment portions, in addition to a balance adjustment part A of the nut 43, thereby increasing an adjustment amount of the rotational balance, and enabling fine adjustment.

### (Third Embodiment)

In this third embodiment, components that are identical with those of the first and second embodiments are denoted by the same reference numerals, and description thereof will be omitted.

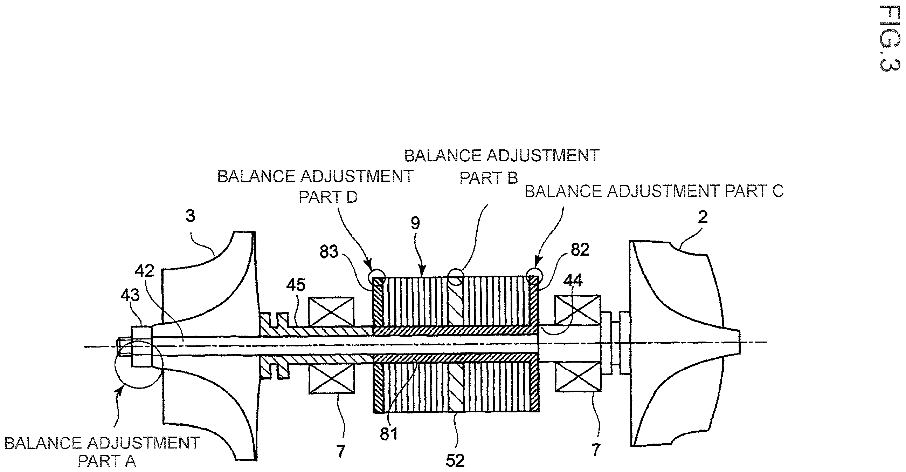

As shown in Fig. 3, a rotor core 9 is configured such that a plurality of electromagnetic steel plates 51 and a center ring 52 being a rotational balance adjusting member are disposed on a sleeve 81 fitted onto a narrow portion 42 of a shaft 4.

The sleeve 81 is formed with a flange part 82 radially from an open edge on the one end side of the sleeve 81.

On the outer peripheral part of the sleeve 81, the electromagnetic steel plates 51 are fitted onto the sleeve 81 so as to be laminated in the thrust direction of the sleeve 81. The center ring 52 being a rotational balance adjusting member is disposed on the intermediate part of the laminated electromagnetic steel plates 51 in the thrust direction of the sleeve 81, particularly on the central part. On the other end side of the sleeve 81, a pressing ring 83 is fitted onto the outer peripheral part of the sleeve 81 to be fixed in caulking to the sleeve 81 in a state of pressing the electromagnetic steel plates 51 in the thrust direction.

The processes of a rotational balance adjusting method is similar to those of the first embodiment, and therefore description thereof will be omitted.

The electromagnetic steel plates 51 are fitted onto the sleeve 81 in a laminated manner, and the both sides of the electromagnetic steel plates 51 are sandwiched between the flange part 82 and the pressing ring 83, thereby forming the rotor core 8 in a cartridge-type, facilitating assembly to the shaft 4, and improving the quality of the assembly. Additionally, both sides of the electromagnetic steel plates 51 are sandwiched between the flange part 82 and the pressing ring 83, thereby regulating relative movement of the electromagnetic steel plates 51 and the sleeve 81 during rotation, and easily forming the rotor core 8 in a cartridge type.

Furthermore, the center ring 52 is interposed on the intermediate part (central part) of the laminated electromagnetic steel plates 51, and hence magnetic induction is uniformed, thereby improving output as a motor.

Moreover, a balance adjustment part C of the flange part 82, a balance adjustment part D of the pressing ring 83, and a balance adjustment part B of the center ring 52 serve as rotational balance adjustment portions, in addition to a balance adjustment part A of a nut 43, thereby increasing an adjustment amount of the rotational balance, and enabling fine adjustment.

### INDUSTRIAL APPLICABILITY

In order to improve the output of an internal combustion, a motor generator is incorporated in a rotary shaft of a turbo charger that is driven by exhaust gas of the internal combustion, and compresses and turbocharges supply air, and the rotation of a compressor impeller is assisted for acceleration, thereby improving acceleration responsiveness. Additionally, the turbo charger incorporating a motor generator is suitable for use in an internal combustion that is capable of converting exhaust gas energy into electric energy.

## Claims

1. A balance adjusting structure for a turbocharging device incorporating a magnetic inductor type motor, comprising:
at least one rotor blade disposed in a housing;
a shaft (4) connected to the rotor blade;
a bearing (7) formed in the housing, and configured to rotatably axially support the shaft (4);
a rotor core (5) penetrated by the shaft (4); and
a stator disposed at a position facing the rotor core (5) in the housing, and configured to rotate and drive the rotor core (5) together with the shaft (4) by a magnetic field, **characterized in that**
the rotor core (5) includes:
a sleeve (53) fitted onto the shaft (4);
a plurality of electromagnetic steel plates (51) having a circular circumference, laminated in an axial direction of the sleeve (53) and fitted onto the sleeve (53); and
a rotational balance adjusting member (52; 82, 83) disposed on a part of the electromagnetic steel plates (51) in a laminating direction, and having a thickness larger than a thickness of each electromagnetic steel plate (51), and
the rotational balance adjusting member (52; 82, 83) is processed to adjust rotational balance, wherein the rotor core (5) is configured such that the rotational balance adjusting member (52; 82, 83) is disposed on an intermediate part of the laminated electromagnetic steel plates (51).

2. The balance adjusting structure for a turbocharging device incorporating a magnetic inductor type motor according to claim 1, wherein
the rotor core (5) includes:
the sleeve (53) fitted onto the shaft (4);
the plurality of electromagnetic steel plates (51) fitted onto the sleeve (53), and arranged as a lamination; and
a rotational balance adjusting member (52; 82, 83) fixed to both ends of the sleeve (53), and configured to fix and sandwich the plurality of electromagnetic steel plates (51).

3. The balance adjusting structure for a turbocharging device incorporating a magnetic inductor type motor according to claim 1, wherein
the rotor core (5) has:
a rotational balance adjusting member (52; 82, 83) fitted onto the sleeve (53), and interposed on an intermediate part of the plurality of electromagnetic steel plates (51) that are arranged as a lamination; and
a rotational balance adjusting member (52; 82, 83) configured to fix and sandwich both ends of the laminated electromagnetic steel plates (51), and fixed to both ends of the sleeve (53).

4. The balance adjusting structure for a turbocharging device incorporating a magnetic inductor type motor according to claim 1, wherein
at least one rotational balance adjusting member (52; 82, 83) of the rotational balance adjusting members (52; 82, 83) is configured by assembling laminated layers of the same magnetic material as the electromagnetic steel plates (51) of the rotor core (5).

5. The balance adjusting structure for a turbocharging device incorporating a magnetic inductor type motor according to any one of claims 1 to 4, wherein
the turbocharging device incorporating a magnetic inductor type motor is either a turbo charger incorporating a motor generator that is mounted with a turbine wheel (2), which is a rotor blade for utilizing exhaust gas energy on an end of the shaft (4) penetrating the rotor core (5) and the bearing (7), and that is also mounted with a compressor impeller (3), which is a rotor blade for compressing inlet air on other end thereof, or an electric supercharger that does not have the turbine wheel (2) and that is mounted with a compressor impeller (3) for compressing inlet air only on one end of the shaft (4).

6. A rotational balance adjusting method for a rotor (1) of a turbocharging device incorporating a magnetic inductor type motor, the turbocharging device comprising
a balance adjusting structure comprising:
at least one rotor blade disposed in a housing;
a shaft (4) connected to the rotor blade;
a bearing (7) formed in the housing, and configured to rotatably axially support the shaft (4);
a rotor core (5) penetrated by the shaft (4); and
a stator disposed at a position facing the rotor core (5) in the housing, and configured to rotate and drive the rotor core (5) together with the shaft (4) by a magnetic field, **characterized in that**
the rotor core (5) includes:
a sleeve (53) fitted onto the shaft (4);
a plurality of electromagnetic steel plates having a circular circumference (51), laminated in an axial direction of the sleeve (53) and fitted onto the sleeve (53); and
a rotational balance adjusting member (52; 82, 83) disposed on an intermediate part of the electromagnetic steel plates (51) in a laminating direction, and having a thickness larger than a thickness of each electromagnetic steel plate (51), and made of magnetic material, and
the rotational balance adjusting member (52; 82, 83) is processed to adjust rotational balance,
wherein the rotor core (5) is configured such that the rotational balance adjusting member (52; 82, 83) is disposed on an intermediate part of the laminated electromagnetic steel plates (51),
the method comprising the steps of:
assembling a rotor (1) including the rotor blade, and the rotor core (5);
measuring a balance amount by rotating the rotor (1); and
adjusting and processing rotational balance by using the rotational balance adjusting member (52; 82, 83) of the rotor core (5) on the basis of a result of measurement.

7. The balance adjusting method for a turbocharging device incorporating a magnetic inductor type motor according to claim 6, further comprising
a step of adjusting rotational balance by singly using the rotor core (5) before the step of assembling the rotor (1).

8. The balance adjusting structure for a turbocharging device incorporating a magnetic inductor type motor according to claim 1, further comprises
a rotor blade fastening nut (31) for fastening the at least one rotor blade to the shaft (4) on the end of the shaft (4).

9. The balance adjusting structure for a turbocharging device incorporating a magnetic inductor type motor according to claim 8,
wherein the rotational balance adjusting member (52; 82, 83) has a diameter larger than a diameter of the rotor blade fastening nut (31).

## Patentansprüche

1. Eine Gleichgewichtseinstellvorrichtung für eine Turboladervorrichtung umfassend einen magnetischen induktorartigen Motor aufweisend:
zumindest eine Rotorschaufel, welche in einem Gehäuse angeordnet ist;
eine Welle (4), welche mit der Rotorschaufel verbunden ist;
ein Lager (7), welches in dem Gehäuse gebildet ist und eingerichtet ist, um die Welle (4) drehbar axial zu stützen;
einen Rotorkern (5), welcher von der Welle (4) durchdrungen ist; und
einen Stator, welcher an einer Position, bei welcher er dem Rotorkern (5) in dem Gehäuse zugewandt ist, angeordnet ist, und wobei er eingerichtet ist, um zu drehen und den Rotorkern (5) zusammen mit der Welle (4) durch ein magnetisches Feld anzutreiben, **dadurch gekennzeichnet, dass**
der Rotorkern (5) beinhaltet:
eine Hülse (53), welche auf der Welle (4) angepasst ist;
eine Vielzahl von elektromagnetischen Stahlplatten (51), welche einen Kreisumfang aufweisen, in einer axialen Richtung der Hülse (53) geschichtet sind und auf der Hülse (53) angepasst sind; und
ein Rotationsgleichgewichtseinstellelement (52; 82, 83), welches auf einem Teil der elektromagnetischen Stahlplatten (51) in einer Schichtrichtung angeordnet ist und welches eine Dicke aufweist, die größer ist als eine Dicke von jeder elektromagnetischen Stahlplatte (51) und wobei das Rotationsgleichgewichteinstellelement (52; 82, 83) bearbeitet ist, um das Rotationsgleichgewicht einzustellen, wobei der Rotorkern (5) so eingerichtet ist, dass das Rotationsgleichgewichteinstellelement (52; 82, 83) an einem Zwischenteil der geschichteten elektromagnetischen Stahlplatten (51) angeordnet ist.

2. Gleichgewichtseinstellvorrichtung für eine Turboladervorrichtung umfassend einen magnetischen induktorartigen Motor nach Anspruch 1, wobei
der Rotorkern (5) beinhaltet, dass:
die Hülse (53) auf der Welle (4) angepasst ist;
die Vielzahl der elektromagnetischen Stahlplatten (51) auf der Hülse (53) angepasst sind und als eine Schichtung angeordnet sind; und
ein Rotationsgleichgewichtseinstellelement (52; 82, 83) an beiden Enden der Hülse (53) befestigt ist, und eingerichtet ist, um die Vielzahl der elektromagnetischen Stahlplatten (51) zu befestigen und einzupferchen.

3. Gleichgewichtseinstellvorrichtung für eine Turboladervorrichtung umfassend einen magnetischen induktorartigen Motor nach Anspruch 1, wobei
der Rotorkern (5) aufweist:
ein Rotationsgleichgewichtseinstellelement (52; 82, 83), welches auf der Hülse (53) angepasst ist,
und welches an einem Zwischenteil der Vielzahl von elektromagnetischen Stahlplatten (51), welche als eine Schichtung angeordnet sind, eingeschoben ist; und
ein Rotationsgleichgewichtseinstellelement (52; 82, 83), welches eingerichtet ist, um beide Enden der geschichteten elektromagnetischen Stahlplatten (51) zu befestigen und einzupferchen und welches an beiden Enden der Hülse (53) befestigt ist.

4. Gleichgewichtseinstellvorrichtung für eine Turboladervorrichtung umfassend einen magnetischen induktorartigen Motor nach Anspruch 1, wobei
zumindest ein Rotationsgleichgewichtseinstellelement (52; 82, 83) der Rotationsgleichgewichtseinstellelemente (52; 82, 83) eingerichtet ist durch Zusammenfügen geschichteter Schichten desselben magnetischen Materials wie das der elektromagnetischen Stahlplatten (51) des Rotorkerns (5).

5. Gleichgewichtseinstellvorrichtung für eine Turboladervorrichtung umfassend einen magnetischen induktorartigen Motor nach einem der Ansprüche 1 bis 4, wobei
die Turboladervorrichtung, umfassend einen magnetischen induktorartigen Motor, der entweder ein Turbolader, umfassend einen Motorgenerator ist, welcher mit einem Turbinenrad (2) befestigt ist, welches eine Rotorschaufel ist zum Nutzen von Abgasenergie an einem Ende der Welle (4), welche den Rotorkern (5) und das Lager (7) durchdringt und der auch mit einem Kompressorflügelrad (3) befestigt ist, welches eine Rotorschaufel ist, zum Verdichten von Einlassluft an dem anderen Ende davon, oder ein elektrischer Turbolader, der das Turbinenrad (2) nicht aufweist und der mit einem Kompressorflügelrad (3), zum Verdichten von Einlassluft nur an einem Ende der Welle (4), befestigt ist.

6. Ein Verfahren zum Einstellen eines Rotationsgleichgewichts für einen Rotor (1) einer Turboladervorrichtung umfassend einen magnetischen induktorartigen Motor, wobei die Turboladervorrichtung aufweist
eine Gleichgewichtseinstellvorrichtung aufweisend:
zumindest eine Rotorschaufel, welche in einem Gehäuse angeordnet ist;
eine Welle (4), welche mit der Rotorschaufel verbunden ist;
ein Lager (7), welches in dem Gehäuse gebildet ist und welches eingerichtet ist, um drehbar axial die Welle (4) zu stützen;
einen Rotorkern (5), welcher von der Welle (4) durchdrungen ist; und
einen Stator, welcher an einer Position, bei welcher er dem Rotorkern (5) in dem Gehäuse zugewandt ist, angeordnet ist und welcher eingerichtet ist, den Rotorkern (5) zusammen mit der Welle (4) durch ein magnetisches Feld zu drehen und anzutreiben, **dadurch gekennzeichnet, dass**
der Rotorkern (5) beinhaltet:
eine Hülse (53), welche auf der Welle (4) angepasst ist;
eine Vielzahl von elektromagnetischen Stahlplatten, welche einen Kreisumfang aufweisen (51) und welche in einer axialen Richtung der Hülse (53) geschichtet sind und auf der Hülse (53) angepasst sind; und
ein Rotationsgleichgewichtseinstellelement (52; 82, 83), welches an einem Zwischenteil der elektromagnetischen Stahlplatten (51) in einer Schichtrichtung angeordnet ist und welches eine Dicke aufweist, die größer ist als eine Dicke von jeder elektromagnetischen Stahlplatte (51) und welches aus einem magnetischen Material hergestellt ist und
wobei das Rotationsgleichgewichtseinstellelement (52; 82, 83) bearbeitet ist, um ein Rotationsgleichgewicht einzustellen,
wobei der Rotorkern (5) so eingerichtet ist, dass das Rotationsgleichgewichtseinstellelement (52; 82, 83) an einem Zwischenteil der geschichteten elektromagnetischen Stahlplatten (51) angeordnet ist,
wobei das Verfahren die Schritte aufweist:
Zusammenfügen eines Rotors (1), beinhaltend die Rotorschaufel und den Rotorkern (5);
Messen eines Gleichgewichtswertes durch Drehen des Rotors (1); und
Einstellen und Bearbeiten eines Rotationsgleichgewichts durch Verwenden des Rotationsgleichgewichtseinstellelements (52; 82, 83) des Rotorkerns (5), basierend auf einem Ergebnis der Messung.

7. Gleichgewichtseinstellvorrichtung für eine Turboladervorrichtung umfassend einen magnetischen induktorartigen Motor nach Anspruch 6, weiter aufweisend
einen Schritt zum Einstellen eines Rotationsgleichgewichts durch ein einziges Verwenden des Rotorkerns (5) vor dem Schritt des Zusammenfügens des Rotors (1).

8. Gleichgewichtseinstellvorrichtung für eine Turboladervorrichtung umfassend einen magnetischen induktorartigen Motor nach Anspruch 1, weiter aufweisend:
eine Rotorschaufelbefestigungsmutter (31) zum Befestigen von zumindest einer Rotorschaufel an der Welle (4) an dem Ende der Welle (4).

9. Gleichgewichtseinstellvorrichtung für eine Turboladervorrichtung umfassend einen magnetischen induktorartigen Motor nach Anspruch 8, wobei das Rotationsgleichgewichtseinstellelement (52; 82, 83) einen Durchmesser aufweist, der größer ist als ein Durchmesser der Rotorschaufelbefestigungsmutter (31).

## Revendications

1. Une structure d'ajustement d'équilibrage pour un dispositif turbocompresseur incorporant un moteur du type à inducteur magnétique, comprenant :
au moins un aubage de rotor disposé dans un carter ;
un arbre (4) relié à l'aubage de rotor ;
un palier (7) formé dans le carter, et configuré pour supporter l'arbre (4) axialement à rotation ;
un noyau de rotor (5) dans lequel pénètre l'arbre (4) ; et
un stator disposé en une position faisant face au noyau de rotor (5) dans le boitier, et configuré pour faire tourner et entrainer par un champ magnétique le noyau de rotor (5) en même temps que l'arbre (4), **caractérisé en ce que**
le noyau de rotor (5) comprend :
un manchon (53) assujetti sur l'arbre (4) ;
une pluralité de plaques d'acier électromagnétique (51) présentant une circonférence circulaire, disposées en couches dans une direction axiale du manchon (53) et assujetties sur le manchon (53) ; et
un élément d'ajustement d'équilibrage en rotation (52 ; 82, 83) disposé sur une partie des plaques d'acier électromagnétique (51) dans une direction de couchage, et présentant une épaisseur plus grande qu'une épaisseur de chacune des plaques d'acier électromagnétique (51), et
l'élément d'ajustement d'équilibrage en rotation (52 ; 82, 83) est traité pour ajuster l'équilibre en rotation, le noyau de rotor (5) étant configuré de telle sorte que l'élément d'ajustement d'équilibrage en rotation (52 ; 82, 83) soit disposé sur une partie intermédiaire des plaques d'acier électromagnétique disposées en couches (51).

2. La structure d'ajustement d'équilibrage pour un dispositif turbocompresseur incorporant un moteur du type à inducteur magnétique selon la revendication 1, dans laquelle
le noyau de rotor (5) comprend :
le manchon (53) assujetti sur l'arbre (4) ;
la pluralité de plaques d'acier électromagnétique (51) assujetties sur le manchon (53) et agencées sous forme de couches ; et
un élément d'ajustement d'équilibrage en rotation (52 ; 82, 83) fixé aux deux extrémités du manchon (53), et configuré pour fixer et prendre en sandwich la pluralité de plaques d'acier électromagnétique (51).

3. La structure d'ajustement d'équilibrage pour un dispositif turbocompresseur incorporant un moteur du type à inducteur magnétique selon la revendication 1, dans laquelle
le noyau de rotor (5) possède :
un élément d'ajustement d'équilibrage en rotation (52 ; 82, 83) assujetti sur le manchon (53) et interposé sur une partie intermédiaire de la pluralité de plaques d'acier électromagnétique (51) qui sont agencées sous forme de couches ; et
un élément d'ajustement d'équilibrage en rotation (52 ; 82, 83) configuré pour fixer et prendre en sandwich les deux extrémités des plaques d'acier électromagnétique disposées en couches (51), et fixé aux deux extrémités du manchon (53).

4. La structure d'ajustement d'équilibrage pour un dispositif turbocompresseur incorporant un moteur du type à inducteur magnétique selon la revendication 1, dans laquelle
au moins un élément d'ajustement d'équilibrage en rotation (52 ; 82, 83) des organes d'ajustement d'équilibrage en rotation (52 ; 82, 83) est configuré par assemblage de couches superposées du même matériau magnétique que les plaques d'acier électromagnétique (51) du noyau de rotor (5).

5. La structure d'ajustement d'équilibrage pour un dispositif turbocompresseur incorporant un moteur du type à inducteur magnétique selon l'une quelconque des revendications 1 à 4, dans laquelle
le dispositif turbocompresseur incorporant un moteur du type à inducteur magnétique est soit un turbocompresseur incorporant un générateur de moteur qui est monté avec une roue de turbine (2), qui est un aubage de rotor pour l'utilisation de l'énergie des gaz d'échappement sur une extrémité de l'arbre (4) pénétrant dans le noyau de rotor (5) et le palier (7), et qui est également monté avec un rouet de compresseur (3), qui est un aubage de rotor pour comprimer de l'air d'admission à l'autre extrémité de ceux-ci, soit un compresseur électrique à suralimentation qui ne possède pas la roue de turbine (2) et qui est monté avec un rouet de compresseur (3) pour comprimer l'air d'admission d'une seule extrémité de l'arbre (4).

6. Un procédé d'ajustement d'équilibrage en rotation pour un rotor (1) d'un dispositif turbocompresseur incorporant un moteur du type à inducteur magnétique, le dispositif turbocompresseur comprenant
une structure d'ajustement d'équilibrage comprenant :
au moins un aubage de rotor disposé dans un carter ;
un arbre (4) relié à l'aubage de rotor ;
un palier (7) formé dans le carter, et configuré pour supporter l'arbre (4) axialement à rotation ;
un noyau de rotor (5) dans lequel pénètre l'arbre (4) ; et
un stator disposé en une position faisant face au noyau de rotor (5) dans le boitier, et configuré pour faire tourner et entrainer par un champ magnétique le noyau de rotor (5) en même temps que l'arbre (4), **caractérisé en ce que** le noyau de rotor (5) comprend :
un manchon (53) assujetti sur l'arbre (4) ;
une pluralité de plaques d'acier électromagnétique (51) présentant une circonférence circulaire (51), disposées en couches dans une direction axiale du manchon (53) et assujetties sur le manchon (53) ; et
un élément d'ajustement d'équilibrage en rotation (52 ; 82, 83) disposé sur une partie intermédiaire des plaques d'acier électromagnétique (51) dans une direction de couchage, et présentant une épaisseur plus grande qu'une épaisseur de chacune des plaques d'acier électromagnétique (51), et
l'élément d'ajustement d'équilibrage en rotation (52 ; 82, 83) est traité pour ajuster l'équilibre en rotation,
le noyau de rotor (5) étant configuré de telle sorte que l'élément d'ajustement d'équilibrage en rotation (52 ; 82, 83) soit disposé sur une partie intermédiaire des plaques d'acier électromagnétique disposées en couches (51),
le procédé comprenant les étapes de :
assemblage d'un rotor (1) comprenant l'aubage de rotor et le noyau de rotor (5) ;
mesure d'un niveau d'équilibrage par mise en rotation du rotor (1) ; et
ajustement et traitement de l'équilibrage en rotation par utilisation de l'élément d'ajustement d'équilibrage en rotation (52 ; 82, 83) du noyau de rotor (5) sur la base d'un résultat de mesure.

7. Le procédé d'ajustement d'équilibrage pour un dispositif turbocompresseur incorporant un moteur du type à inducteur magnétique selon la revendication 6, comprenant en outre
une étape d'ajustement de l'équilibrage en rotation uniquement par utilisation du noyau de rotor (5) avant l'étape d'assemblage du rotor (1).

8. La structure d'ajustement d'équilibrage pour un dispositif turbocompresseur incorporant un moteur du type à inducteur magnétique selon la revendication 1, comprenant en outre
un écrou de fixation de l'aubage de rotor (31) pour la fixation de l'au moins un aubage de rotor à l'arbre (4) sur l'extrémité de l'arbre (4).

9. La structure d'ajustement d'équilibrage pour un dispositif turbocompresseur incorporant un moteur du type à inducteur magnétique selon la revendication 8,
dans laquelle l'élément d'ajustement d'équilibrage en rotation (52 ; 82, 83) présente un diamètre plus grand qu'un diamètre de l'écrou de fixation de l'aubage de rotor (31).
